# EUROPEAN PATENT SPECIFICATION

(11) **EP 2 153 605 B1**
(45) Date of publication and mention of the grant of the patent: **04.11.2015**
(21) Application number: 08753274.3
(22) Date of filing: 30.04.2008
(51) Int. Cl.: H04L 27/26, H04L 1/00, H04L 5/00

(54) **ORTHOGONAL FREQUENCY-DIVISION MULTIPLEXING (OFDM) TRANSMITTING AND RECEIVING DEVICE FOR TRANSMISMITTING AND RECEIVING AN OFDM SYMBOL HAVING SYMBOLS INTERLEAVED VARIABLY, AND METHODS THEREOF**
OFDM (MULTIPLEXING MIT ORTHOGONALER FREQUENZTEILUNG)-SENDE- UND EMPFANGSVORRICHTUNG ZUM SENDEN UND EMPFANGEN EINES OFDM-SYMBOLS MIT VARIABEL ÜBERLAPPENDEN SYMBOLEN UND VERFAHREN DAFÜR
ÉMETTEUR ET RÉCEPTEUR POUR MULTIPLEXAGE À RÉPARTITION ORTHOGONALE DE LA FRÉQUENCE (MROF) POUR L'ÉMISSION ET LA RÉCEPTION D'UN SYMBOLE MROF POSSÉDANT DES SYMBOLES ENTRELACÉS DE FAÇON VARIABLE, ET PROCÉDÉS CORRESPONDANTS

(30) Priority: 01.06.2007 KR 20070054135
(43) Date of publication of application: 17.02.2010
(73) Proprietor: Samsung Electronics Co., Ltd., Suwon-si, Gyeonggi-do, 443-742 (KR)
(72) Inventor: KIM, Ki-bo, Hwaseong-si Gyeonggi-do 445-752 (KR); LEE, June-hee, Seongnam-si Gyeonggi-do 463-863 (KR)
(74) Representative: Appleyard Lees
(86) International application number: PCT/KR2008/002474
(87) International publication number: WO 2008/147053

(56) References cited:
- EP-A1- 1 612 980
- EP-A1- 1 801 992
- WO-A1-2006/060780
- JP-A- 2005 269 670
- US-B1- 6 278 685
- US-B1- 6 377 566
- LEI S.W. AND LAU V.K.N.: 'Adaptive Interleaving for OFDm in TDD systems' COMMUNICATIONS, IEE PROCEEDINGS vol. 148, no. 2, April 2001, pages 77 - 80, XP001058806

## Description

### Technical Field

The present invention relates to an OFDM transmitting and receiving device and method. More particularly, the present invention relates to an OFDM transmitting and receiving device which transmits and receives an OFDM symbol which is interleaved in subcarrier units by sequentially applying a plurality of interleaving rules.

### Background Art

As digital technology has been introduced into broadcast systems due to developments in electronic and communication technology, diverse standards for digital broadcasting have been developed. Specifically, the U.S. terrestrial digital broadcast transmission standard is Advanced Television System Committee (ATSC) Vestigial Side Band (VSB), and the European terrestrial digital broadcast transmission standard is Digital Video Broadcasting-Terrestrial (DVB-T). These two standards differ in many aspects, such as the voice compression method employed and the channel band, and differ especially in that the ATSC VSB standard is a single carrier scheme but the DVB-T standard is a multi-carrier scheme.

The multi-carrier scheme adopted by the DVB-T standard is an orthogonal frequency division multiplexing (OFDM) scheme. The OFDM scheme has been adopted as a standard for IEEE 802.11a, ETSI BRAN'S HIPERLAN/2, and DAB and DVB-T, which are European digital television broadcast standards. In a conventional single carrier transmission scheme in which information contained in a single carrier is transmitted, since interference between symbols is severe, distortion increases. To this end, the complexity of an equalizer in a receiving device must be high. In order to solve these problems with such a single carrier transmission scheme, an OFDM scheme has been developed.

The OFDM scheme transmits data using a multi-carrier by converting input series data symbols into parallel symbols and modulating each symbol to become a plurality of tone signals having orthogonality.

The OFDM scheme is widely used in digital transmission technology such as digital audio broadcasting (DAB), digital television, wireless local area network (WLAN), and wireless asynchronous transfer mode (WATM). In particular, since the OFDM scheme maintains orthogonality between neighboring tone signals, compared with a conventional multi-carrier scheme, optimal transmission efficiency can be obtained when transmitting high-speed data, frequency use efficiency is high, and prevention of multi-path fading is strong.

In the OFDM scheme, OFDM symbols are transmitted and received in units of diverse transmission, for example, by the frame or super frame. Each OFDM symbol consists of a plurality of subcarriers. Each subcarrier can express at least one data bit.

In a broadcast transmitting and receiving system, a single transmitting device generally takes charge of a certain size of district. There may be diverse types of receiving devices, such as televisions, set-top boxes, personal digital assistants (PDA), laptop computers, and cell phones, in the district. Each receiving device processes data using diverse decoding methods according to characteristics such as mobility and system processing performance. Accordingly, in order for a single transmitting device to provide data for diverse receiving devices, a hierarchical transmission method for transmitting an OFDM symbol consisting of diverse types of data is used. The priority of each type of data can be set according to a variety of references.

In a conventional DVB-T system, a hierarchical transmission method for mixing data with a high priority (HP) and data with a low priority (LP) in a single subcarrier and transmitting the subcarrier is used. The HP and the LP are divided according to a position of a bit which is allocated in mapping. Specifically, if mapping is performed in 64QAM, 6 bits are mapped for a single subcarrier. HP is allocated to the first two bits which determine a position in the first, second, third and fourth quadrants of a mapping constellation, and LP is allocated to the remaining four bits. Accordingly, the ratio of HP and LP becomes 1:2. Alternatively, if mapping is performed in 16QAM, 4 bits are mapped for a single subcarrier so that the ratio of HP and LP becomes 1:1. Alternatively, if mapping is performed in QPSK, 2 bits are mapped for a single subcarrier, so hierarchical transmission is impossible.

As described above, in order to transmit HP and LP together in a conventional DVB-T system, restricted mapping methods such as 16QAM and 64 QAM must be used, and the priority levels can only be divided into two kinds, such as high or low, and the ratio of HP and LP can only be fixed to be 1:1 or 1:2. Accordingly, a user cannot adjust the ratio.

In order to solve the above problems, a conventional way to transmit and receive an OFDM symbol in which the priority varies in subcarrier units by binding up data bits having the same priority into a single subcarrier was developed. However, in this case, if degradation occurs continuously in a particular subcarrier area by frequency fading during transmission, performance of restoring errors in the subcarrier of the area decreases. In particular, in the case of receiving devices which receive signals in fixed positions, such as a television and a set-top box, if degradation occurs in a subcarrier area having the priority which is allocated to themselves, data cannot normally be restored from the degraded subcarrier. US 6377566 B1 (Cupo Robert Louis et AL) describes an OFDM transmitter comprising an interleaving unit which performs interleaving of subcarriers according to a selected interleaving rule.

### Disclosure of Invention

### Technical Problem

The present invention aims to solve the above problems and to provide an OFDM transmitting device according to claim 1.

Another object of the present invention is to provide an OFDM receiving device according to claim 8.

### Technical Solution

In order to achieve the above object, an orthogonal frequency division multiplexing (OFDM) transmitting device includes a transmission processing unit which generates subcarriers with different priorities, an interleaving unit which selects one of a plurality of pre-defined interleaving rules and interleaves the subcarriers in units of subcarrier according to the selected interleaving rule, and a transmission unit which outputs an OFDM symbol consisting of the interleaved subcarriers via a wireless channel.

The transmission processing unit may map data by alternately applying a plurality of mapping manners so that the plurality of subcarriers which varies priorities according to the mapping manners are generated and output.

The interleaving unit may alternately apply the plurality of interleaving rules so that the positions of subcarriers with a high priority and subcarriers with a low priority from among the plurality of subcarriers are changed periodically.

The transmission processing unit may include a scrambler which randomizes data to transmit, an FEC encoder which codes the randomized data, and a mapper which maps the subcarriers of the coded data by alternately applying the plurality of mapping manners so that the subcarriers with priorities according to the applied mapping manners are output to the interleaving unit.

The transmission processing unit may include a plurality of transmission processing modules each which code and output the data in different coding manners, and the interleaving unit interleaves the subcarriers which are provided from the plurality of transmission processing modules respectively by alternately selecting and applying the plurality of interleaving rules.

The OFDM transmitting device may further include a storage unit which stores information on the plurality of interleaving rules, wherein the interleaving unit performs interleaving by sequentially identifying the information on the plurality of interleaving rules, which are stored in the storage unit.

The interleaving unit may change an interleaving rule to be applied whenever interleaving of a pre-defined number of OFDM symbols is completed.

In order to achieve the above object, an OFDM transmitting method includes generating subcarriers with different priorities, selecting one of a plurality of pre-defined interleaving rules and interleaving the subcarriers in units of subcarrier according to the selected interleaving rule, and outputting an OFDM symbol consisting of the interleaved subcarriers via a wireless channel.

In generating the subcarriers, data my be mapped by alternately applying a plurality of mapping manners so that the plurality of subcarriers which varies priorities according to the mapping manners are generated and output.

In interleaving the subcarriers, the plurality of interleaving rules may be alternately applied so that the positions of subcarriers with a high priority and subcarriers with a low priority from among the plurality of subcarriers are changed periodically.

In generating the subcarriers, the subcarriers may be generated using a plurality of transmission processing modules each which code the data in different coding manners.

In interleaving the subcarriers, interleaving may be performed by sequentially identifying each interleaving rule from a storage unit which stores information on the plurality of interleaving rules.

In interleaving the subcarriers, an interleaving rule to be applied may vary whenever interleaving of a pre-defined number of OFDM symbols is completed.

In order to achieve the above object, an OFDM receiving devic includes a reception unit which receives OFDM symbols from an OFDM transmitting device, a storage unit which stores a plurality of pre-defined deinterleaving rules, a deinterleaving unit which sequentially selects one of a plurality of pre-defined deinterleaving rules and deinterleaves each received OFDM symbol in units of subcarrier according to the selected deinterleaving rule, and a reception processing unit which processes the OFDM symbols consisting of the deinterleaved subcarriers so that data streams are restored.

The deinterleaving unit may perform deinterleaving by alternately selecting one of the plurality of deinterleaving rules according to an order which is pre-defined between the OFDM transmitting device and the OFDM receiving device.

The reception unit may receive the OFDM symbol in which subcaniers with a high priority and subcarriers with a low priority have been interleaved according to a variable interleaving rule.

The reception processing unit may process only subcarriers which has a priority pre-defined in the deinterleaved OFDM symbol.

The reception unit may include an analog/digital converter which performs analog to digital conversion of an OFDM symbol signal of a time area which is received from the OFDM transmitting device, a demodulator/synchronizer which demodulates and timing-synchronizes the OFDM symbol output from the analog/digital converter, a discrete Fourier transformer (DFT) which performs discrete Fourier transform of the OFDM symbol so that an OFDM symbol of a frequency area is output; and an equalizer which equalizes the OFDM symbol, wherein the deinterleaving unit deinterleaves the OFDM symbol output from the equalizer in units of subcarrier.

The reception processing unit may include a demapper which demaps each deinterleaved OFDM symbol in a demapping manner corresponding to each priority so that data bits are output, an FEC decoder which corrects errors in the data bits and decodes the data bits, and a descrambler which descrambles the data decoded by the FEC decoder so that data streams are restored.

The reception processing unit may include a plurality of reception processing modules each which perform decoding in a different decoding manner.

The deinterleaving unit may change a deinterleaving rule to be applied whenever deinterleaving of a pre-defined number of OFDM symbols is completed.

In order to achieve the above object, an OFDM receiving method includes receiving OFDM symbols from an OFDM transmitting device, sequentially selects one of a plurality of pre-defined deinterleaving rules which are stored in storage unit, deinterleaving each received OFDM symbol in units of subcarrier according to the selected deinterleaving rule, and processing the OFDM symbols consisting of the deinterleaved subcarriers so that data streams are restored.

In alternately selecting one of the plurality of deinterleaving rules, one of the plurality of deinterleaving rules may be alternately selected according to an order which is pre-defined between the OFDM transmitting device and an OFDM receiving device.

In receiving the OFDM symbols, the OFDM symbol may be received in which subcarriers with a high priority and subcarriers with a low priority have been interleaved according to a variable interleaving rule.

In restoring the data streams by processing the OFDM symbols consisting of the deinterleaved subcarriers, only subcarriers which has a priority pre-defined in the deinterleaved OFDM symbol may be processed.

In restoring the data streams by processing the OFDM symbols consisting of the deinterleaved subcarriers, the subcarriers in the deinterleaved OFDM symbol may be divided into a plurality of groups according to the priority of each subcarrier, and each group of subcarriers may be decoded according to a corresponding decoding manner so that the data streams are restored.

In restoring the data streams by processing the OFDM symbols consisting of the deinterleaved subcarriers, the subcarriers in the deinterleaved OFDM symbol may be divided into a plurality of groups according to the priority of each subcarrier, and each group of subcarriers may be demapped according to a corresponding demapping manner and decoded so that the data streams are restored.

In sequentially selecting one of the plurality of deinterleaving rules, a deinterleaving rule to be applied may vary whenever deinterleaving of a pre-defined number of OFDM symbols is completed.

### Advantageous Effects

According to the present invention, since subcarriers are interleaved by variably applying interleaving rules and transmitted, degradation by fixed channel fading is prevented from occurring continuously. Therefore, error correction performance can be improved. As a result, in an environment in which there are a plurality of OFDM receiving devices, satisfaction of users of each OFDM receiving device can be enhanced uniformly.

### Brief Description of the Drawings

FIGS. 1 and 2 are block diagrams illustrating the configuration of an OFDM transmitting device according to diverse exemplary embodiments of the present invention;
FIG. 3 is a block diagram illustrating an example of the configuration of a transmission processing unit or a transmission processing module which can be adopted in the OFDM transmitting devices of FIGS. 1 and 2;
FIG. 4 is a mimetic diagram illustrating a process of performing interleaving according to diverse interleaving rules;
FIG. 5 is a mimetic diagram illustrating an example of an OFDM symbol distorted by fading;
FIG. 6 is a flowchart illustrating an OFDM transmitting method according to an exemplary embodiment of the present invention;
FIG. 7 is a flowchart illustrating the OFDM transmitting method of FIG. 6 in more detail;
FIGS. 8 and 9 are block diagrams illustrating the configuration of an OFDM receiving device according to diverse exemplary embodiments of the present invention;
FIG. 10 is a block diagram illustrating an example of the configuration of a reception processing unit or a reception processing module which can be adopted in the OFDM receiving devices of FIGS. 8 and 9;
FIG. 11 is a flowchart illustrating an OFDM receiving method according to an exemplary embodiment of the present invention; and
FIG. 12 is a flowchart illustrating the OFDM receiving method of FIG. 11 in more detail.

### Best Mode for Carrying Out the Invention

The embodiments are described below in order to explain the present invention by referring to the accompanied drawings.

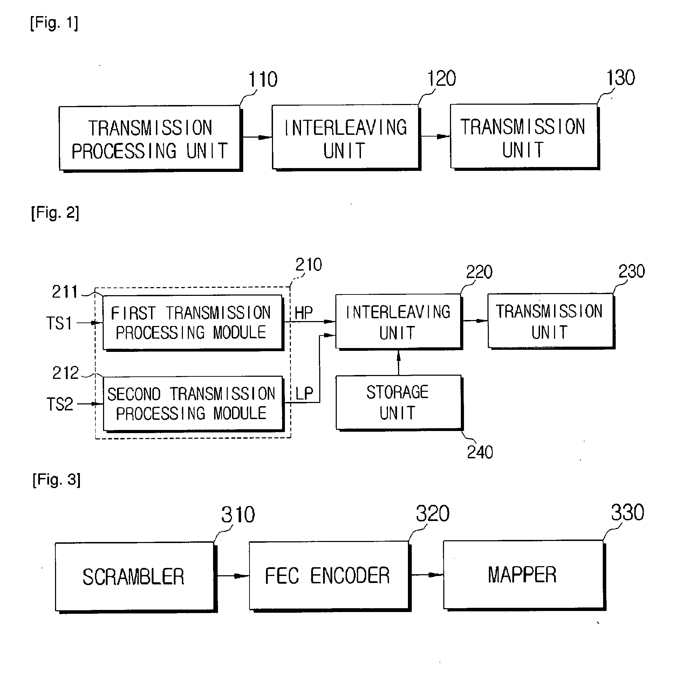

FIG. 1 is a block diagram illustrating the configuration of an OFDM transmitting device according to an exemplary embodiment of the present invention. The OFDM transmitting device includes a transmission processing unit 110, an interleaving unit 120, and a transmission unit 130.

The transmission processing unit 110 generates subcarriers with different priorities. The priority represents relative orders which is determined according to the importance of data, mapping manner, or coding manner. That is, among subcarriers processed in the same method, a subcarrier expressing data which is considered as important such as transmission parameter signaling (TPS) may be allocated a high priority and a subcarrier expressing normal data may be allocated a low priority. TPS represents information regarding modulation, coding rate, and other system transmission parameters.

Alternatively, a subcarrier which is mapped to express more data bits according to a mapping manner may be allocated a high priority, and a subcarrier which is mapped to express less data bits according to a mapping manner may be allocated a low priority. For example, if 64QAM manner, in which 6 bits constitutes a single subcarrier, and 16QAM manner, in which 4 bits constitutes a single subcarrier, are applied in sequence, a subcarrier mapped in 64QAM manner is allocated a high priority, and a subcarrier mapped in 16QAM manner is allocated a low priority.

If a single number of transmission processing unit 110 is implemented as illustrated in FIG. 1, the transmission processing unit 110 can generate subcarriers with diverse priority by periodically varying one of mapping manners including QPSK, 256QAM, 64QAM, and 16QAM.

Alternatively, the transmission processing unit 110 can generate subcarriers with diverse priority according to the coding manner or coding rate. Specifically, a subcarrier having a high coding intensity may be allocated a high priority, and a subcarrier having a low coding intensity may be allocated a low priority.

For example, a subcarrier coded in LDPC coding manner may be allocated a high priority, and a subcarrier coded in a general convolutional coding manner may be may be allocated a low priority. In order to generate subcarriers with different priorities by applying different coding manners, the transmission processing unit 110 must include a plurality of transmission processing modules which code using different coding manners respectively.

If the same coding manner is applied, a subcarrier with a high coding rate is allocated a high priority, and a subcarrier with a low coding rate is allocated a low priority. Detailed description thereof will be given below with reference to FIG. 2.

With the above process, the transmission processing unit 110 outputs subcarriers which can be classified as one of a plurality of priority groups. Hereinbelow, for convenience of description, the priority groups are divided into only a high priority and a low priority, but may also be divided into three groups.

The Interleaving unit 120 performs interleaving in subcarrier units by applying an interleaving rule to a subcarrier provided by the transmission processing unit 110. The Interleaving unit 120 may selectively apply one of a plurality of interleaving rules which are pre-defined between the OFDM transmitting device and OFDM receiving devices. That is, the Interleaving unit 120 modifies the arrangement position of subca rriers by applying a different interleaving rule to every certain number of (for example 1 to 10) OFDM symbols. Therefore, the position of subcarriers having different priorities can be changed periodically.

If an interleaving rule is defined as f(n) which is a function of a variable n, the interleaving unit 120 can vary diverse interleaving rules by adjusting a value of n in sequence. In this case, the OFDM transmission device inserts information on the variable n into each OFDM symbol and transmits the OFDM symbol to each OFDM receiving device, so each OFDM receiving device can select and apply an appropriate deinterleaving rule.

Consequently, when degradation occurs in a particular subcarrier area, the priority of subcarriers in the degraded area are changed continuously, so the OFDM receiving devices in a district taken by the OFDM transmitting device can be little relatively affected by degradation.

The transmission unit 130 processes an OFDM symbol consisting of subcarriers interleaved by the interleaving unit 120, and outputs the processed OFDM symbol via a wireless channel.

The transmission unit 130 may includes an inverse discrete Fourier transformer (IDFT) (not shown), a guard interval (GI) insertion unit (not shown), and an up converter (not shown). The IDFT converts an OFDM symbol in a frequency area into an OFDM symbol in a time area by performing inverse discrete Fourier transformation. It is also possible to apply an IFFT instead of the IDFT. The GI insertion unit inserts a guard interval between subcarriers in order to reduce influence of intersymbol interference (ISI). The up converter up-converts a signal output by the GI insertion unit into a frequency signal in a transmission band, and outputs the up-converted signal via a wireless channel. Since configuration and operation of the transmission unit 130 is described well in a pre-published standard document, detailed description is omitted here.

FIG. 1 is a block diagram illustrating the configuration of an OFDM transmitting device according to another exemplary embodiment of the present invention. The OFDM transmitting device includes a transmission processing unit 210, an interleaving unit 220, a transmission unit 230, and a storage unit 240.

The transmission processing unit 210 includes a first transmission processing module 211, and a second transmission processing module 212. In FIG. 2, only two transmission processing modules 211 and 212 are illustrated, but an exemplary embodiment having three transmission processing modules or more can also be implemented.

The first transmission processing module 211 and the second transmission processing module 212 receive transport streams TS1 and TS2 respectively, and output subcarriers by coding TS1 and TS2 using a particular coding manner. In greater detail, the first transmission processing module 211 and the second transmission processing module 212 may code data using one or combination of a convolutional code, a turbo code, an LDPC code, a BCH code, an RS code, an NR code, and other error correction codes. Consequently, the first transmission processing module 211 and the second transmission processing module 212 can output HP subcarriers with a high priority and LP subcarriers with a low priority respectively.

The interleaving unit 220 receives the HP and LP subcarriers, and performs interleaving in subcarrier units. As described above, the interleaving unit 220 varies a plurality of interleaving rules, and performs interleaving according to the selected interleaving rule. Therefore, the position of the HP and LP subcarriers can change periodically.

The storage unit 240 stores information regarding the interleaving rules which are previously defined between the OFDM transmitting device and OFDM receiving devices. The interleaving unit 220 performs interleaving by sequentially identifying the interleaving rules stored in the storage unit 240.

For convenience of description, if it is assumed that the number of subcarriers in a single OFDM symbol is 10 and a first interleaving rule is {n(i) I i=0, 1, 2, 3, 4, 5, 6, 7, 8, 9} = {2, 4, 6, 1, 0, 3, 9, 5, 8, 7}, a second interleaving rule may be defined and stored in a totally different pattern like {3, 9, 1, 2, 8, 5, 7, 4, 0, 6}. In FIG. 2, the storage unit 240 is illustrated as a separate component, but may be included in the interleaving unit 220.

Alternatively, as described above, if an interleaving rule is defined as f(n) which is a function of a variable n, the interleaving unit 220 can vary diverse interleaving rules by adjusting a value of n in sequence. In this case, the OFDM transmission device may transmit information on the variable n to each OFDM receiving device.

The transmission unit 230 processes the interleaved OFDM symbol and transmits the processed OFDM symbol via a wireless channel.

FIG. 3 is a block diagram illustrating an example of the configuration of the transmission processing unit 110 or the transmission processing module 120 which can be adopted in the OFDM transmitting devices of FIGS. 1 and 2. Hereinbelow, the transmission processing unit 110 is assumed to be configured as in FIG. 3.

As illustrated in FIG. 3, the transmission processing unit 110 includes a scrambler 310, an FEC encoder 320, and a mapper 330.

The scrambler 310 randomizes a transport stream.

The FEC encoder 320 performs FEC coding of the randomized stream. More specifically, the FEC encoder 320 may includes an outer coder (not shown), an interleaver (not shown), and an inner coder (not shown). The outer coder performs outer coding of the randomized stream using Bose-Chaudhuri-Hocquenghem (BCH) or a Reed Solomon (RS) code. The interleaver interleaves the outer-coded stream in units of bit or symbol according to a pre-defined interleaving rule. Subsequently, the inner coder performs inner coding using a convolutional code, a turbo code, or an LDPC code. Since the configuration of such an FEC encoder 320 is described in a published standard document in detail, detailed description is not repeated here.

The mapper 330 maps FEC-coded data bits in diverse mapping manners such as QPSK, 256QAM, 64QAM, and 16QAM. If the transmission processing unit 110 is configured in a single unit as illustrated in FIG. 1, the mapper 330 can vary the priority of output subcarriers by applying each mapping manner alternately.

Alternatively, if one of the first transmission processing module 211 and the second transmission processing module 212 in FIG. 2 is configured as in FIG. 3, the mapper 330 can map subcarriers using a single mapping manner.

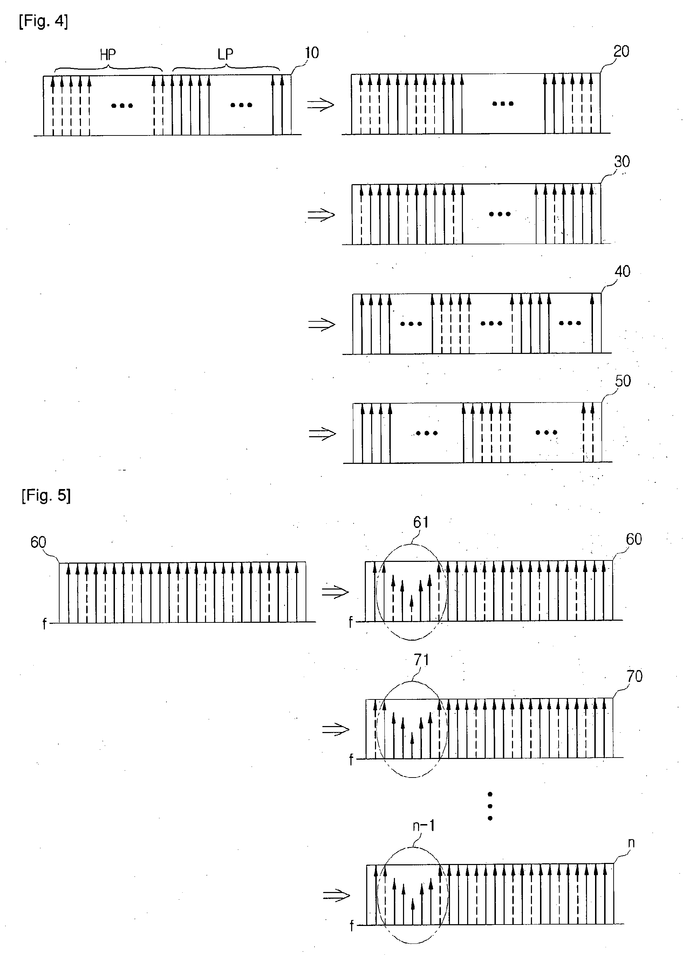

FIG. 4 is a mimetic diagram illustrating diverse patterns of OFDM symbols transmitted from the OFDM transmitting device. As illustrated in FIG. 4, the interleaving units 120 and 220 receives an OFDM symbol including HP and LP subcarriers from the transmission processing units 110 and 210 respectively. For convenience of description, an HP subcarrier is expressed as a dotted line and an LP subcarrier is expressed as a solid line.

In this state, if subcarriers are interleaved using a first interleaving rule, an OFDM symbol 20 is generated such that fixed numbers of HP and LP subcarriers are grouped and alternately arranged.

Subsequently, if subcarriers are interleaved using a second interleaving rule, an OFDM symbol 30 is generated such that each single HP subcarrier is interposed between LP subcarriers.

Subsequently, if subcarriers are interleaved using a third interleaving rule, an OFDM symbol 40 is generated such that all HP subcarriers are arranged in the middle of the OFDM symbol. Subsequently, if subcarriers are interleaved using a fourth interleaving rule, an OFDM symbol 50 is generated such that all HP single subcarriers are grouped together in the rear portion of the OFDM symbol.

The interleaving units 120 and 220 perform interleaving by periodically varying the first to fourth interleaving rules. In FIG. 4, four interleaving rules are illustrated, but the forms of interleaving rules are not limited thereto. In addition, more diverse forms of interleaving rules can be used.

FIG. 5 is a mimetic diagram illustrating an example of an OFDM symbol distorted by fading when transmitting the OFDM symbol. As illustrated in FIG. 5, if an OFDM symbol 60 in which HP and LP subcarriers are mixed is transmitted, a receiving device may receive the OFDM symbol 60 including a distorted area 61. In the first OFDM symbol 60, two HP subcarriers and three LP subcarriers are positioned in the distorted area 61. In the subsequently received OFDM symbols 70 and n, there are no HP subcarriers in the distorted areas 61 and n-1. By periodically varying the interleaving rules in this manner, subcarriers with a particular priority can be prevented from being disposed in a distorted area in a fixed way. Consequently, uniform broadcast quality of service (QoS) for diverse types of receiving devices can be provided.

The OFDM transmitting devices in FIGS. 1 and 2 can receive feedback of distortion information from an OFDM receiving device. Accordingly, an interleaving rule in which HP subcarriers with a high priority are not included in a distorted area is adopted and the adopted interleaving rule is fixedly applied such that discriminating broadcast can be provided.

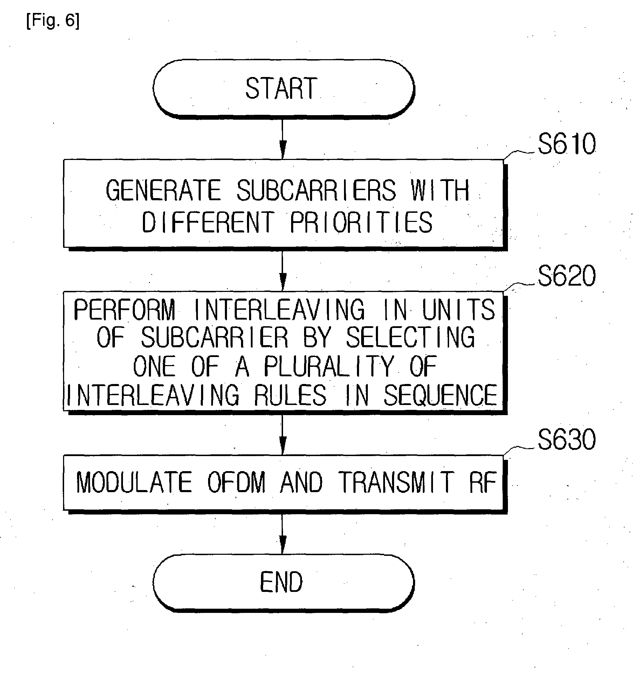

FIG. 6 is a flowchart illustrating an OFDM transmitting method according to an exemplary embodiment of the present invention. As illustrated in FIG. 6, subcarriers with different priorities are generated (S610). As described above, the priority is determined according to diverse references such as the importance of data, mapping manner, coding manner, or coding rate. In order to apply coding manner differently, a plurality of transmission processing modules may be used.

Subsequently, interleaving in subcarrier units is performed by selecting one of a plurality of interleaving rules in sequence and applying the selected interleaving rule (S620). In this case, if the interleaving rule is expressed as f(n) which is a function of a variable n, the interleaving rule can vary by periodically changing a value of n.

Subsequently, the OFDM symbol in which the position of subcarriers periodically changes is modulated and RF transmission is performed (S630).

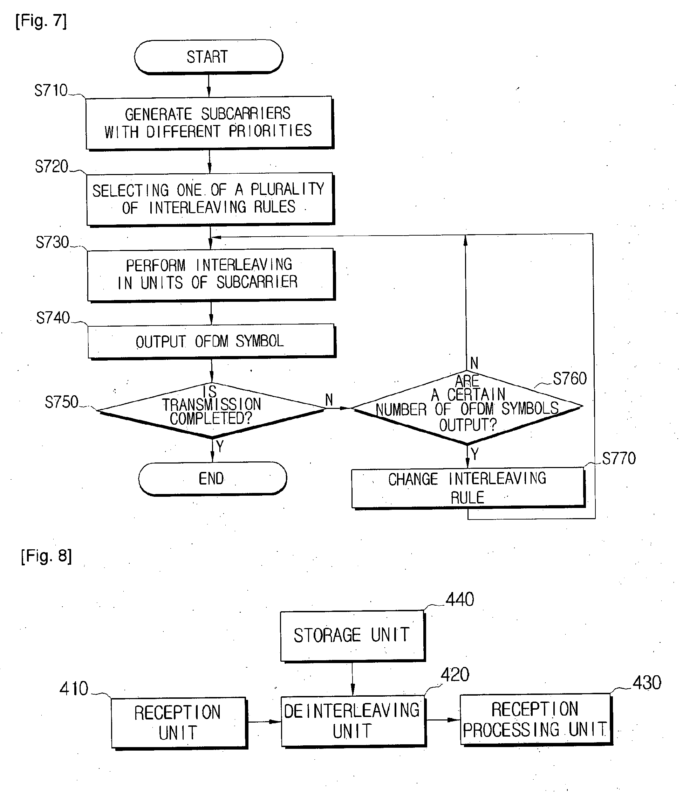

FIG. 7 is a flowchart illustrating the OFDM transmitting method of FIG. 6 in more detail. With reference to FIG. 7, subcarriers with different priorities are generated (S710), one of a plurality of interleaving rules is selected (S720), interleaving in subcarrier units is performed and output (S730 and S740), and it is determined whether or not there are data to transmit (S750).

If there are data to transmit, it is determined whether or not a certain number of OFDM symbols are output (S760). That is, if an interleaving rule is designed to vary for every five OFDM symbol, an interleaving rule is changed for a sixth OFDM symbol (S770) and thus interleaving in subcarrier units is performed (S730). A period of changing an interleaving rule can be set differently according to the design object and environment of system. That is, if distortion by fading occurs frequently, an interleaving rule can be designed to be changed whenever an OFDM symbol is generated.

FIG. 8 is a block diagram illustrating the configuration of an OFDM receiving device according to an exemplary embodiment of the present invention. The OFDM receiving device includes a reception unit 410, a deinterleaving unit 420, a reception processing unit 430, and a storage unit 440.

The reception unit 410 receives an OFDM symbol transmitted via a wireless channel. The received OFDM symbol is in a state that subcarriers with different priorities have been interleaved according to varying interleaving rules.

The deinterleaving unit 420 sequentially selects one of a plurality of pre-defined deinterleaving rules, and deinterleaves the received OFDM symbol in subcarrier units according to the selected deinterleaving rule.

The storage unit 440 stores the plurality of deinterleaving rules which are pre-defined between the OFDM transmitting device and the OFDM receiving device. The deinterleaving unit 420 performs deinterleaving by sequentially selecting the deinterleaving rules stored in the storage unit 440. In this case, if a deinterleaving rule may be defined as s(n) which is a function having a variable n, the deinterleaving unit 420 can adjust the deinterleaving rule by adjusting a value of n in the same pattern as the OFDM transmitting device. That is, the deinterleaving rule can be adjusted by adjusting a value of n by adjusting sync to the OFDM transmitting device or by receiving information on n from the OFDM transmitting device. Alternatively, even if a deinterleaving rule is not defined as s(n), one of the pre-stored deinterleaving rules is selected and applied by receiving code information indicating which interleaving rule has been applied from the OFDM transmitting device.

The reception processing unit 430 processes the deinterleaved OFDM symbol such that a data stream is restored. If the OFDM receiving device can process subcarriers with only a particular priority, the reception processing unit 430 processes subcarriers with only a pre-defined priority in the deinterleaved OFDM symbol such that a data stream is restored. That is, even if the OFDM symbol 10 in FIG. 4 has been interleaved in any one of the first to fourth interleaving rules, if the deinterleaving unit 420 performs deinterleaving appropriately, the OFDM symbol 10 which has a state prior to interleaving is provided to the reception processing unit 430. If the OFDM receiving device is implemented as a mobile device having a high mobility and subcarriers having a high coding intensity are designed to have a high priority, the reception processing unit 430 restores a data stream by decoding an HP subcarrier which is positioned in the front portion of the OFDM symbol 10.

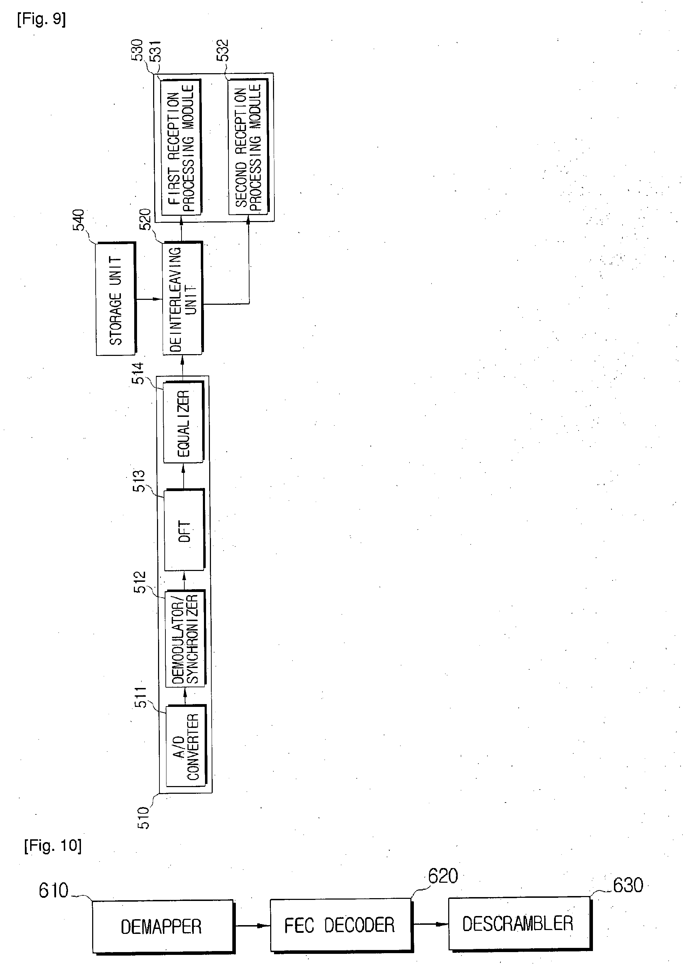

FIG. 9 is a block diagram illustrating the configuration of an OFDM receiving device according to another exemplary embodiment of the present invention. The OFDM receiving device includes a reception unit 510, a deinterleaving unit 520, a reception processing unit 530, and a storage unit 540.

The reception unit 510 includes an A/D converter 511, a demodulator/synchronizer 512, a discrete Fourier transformer (DFT) 513, and an equalizer 514.

The A/D converter 511 performs analog to digital conversion of an OFDM symbol signal of a time area which is received from the OFDM transmitting device. The demodulator/synchronizer 512 performs demodulation and timing synchronization of the OFDM symbol output from the A/D converter 511.

The DFT 513 performs DFT of the OFDM symbol so that an OFDM symbol of a frequency area is output. The DFT 513 can be replaced with an FFT.

The equalizer 514 performs equalization using a pilot subcarrier which has been inserted into the OFDM symbol so that ghost, which is caused by an imperfect element in a transmission channel or the receiving device, or linear distortion such as frequency deformation can be compensated.

The configuration of the reception unit 510 in FIG. 9 may be applied to the reception unit 410 of FIG. 8. Such a configuration of the reception unit 510 can vary according to an exemplary embodiment. More specifically, the reception unit 510 may further include a tuner/intermediate frequency (IF) converter which removes an RF signal from a signal received through an antenna, and converts the signal to be in a IF band or a baseband. Since the components constituting the reception unit 510 are described well in a published standard document, more detailed description and illustration are omitted here.

The reception processing unit 530 in FIG. 9 includes a first reception processing module 531 and a second reception processing module 532. Each reception processing module 531 or 532 performs decoding by applying an individual decoding manner to subcarriers in a particular area of the deinterleaved OFDM symbol so that a data stream is restored. In greater detail, the reception processing unit 530 may include a demultiplexer (not shown) which demultiplexes the deinterleaved OFDM symbol. The demultiplexer divides subcarriers in the OFDM symbols into a plurality of groups according to the priority, and provides each reception processing module 531 or 532 with the divided subcarriers so that each reception processing module 531 or 532 decodes the received subcarriers in an appropriate decoding manner. Consequently, data streams can be restored.

The deinterleaving unit 520 performs deinterleaving by selectively applying one of a plurality of deinterleaving rules which are stored in the storage unit 540, and provides each reception processing module 531 or 532 with the deinterleaved subcarriers.

The deinterleaving unit 520 may also vary and apply a deinterleaving rule whenever a certain number, which is defined between the OFDM transmitting device and the OFDM receiving device, of OFDM symbols are received.

FIG. 10 is a block diagram illustrating an example of the configuration of a reception processing unit or a reception processing module which can be applied to the OFDM receiving devices of FIGS. 8 and 9. Hereinbelow, it is assumed that the configuration of the reception processing unit 430 is described.

As illustrated in FIG. 10, the reception processing unit 430 includes a demapper 610, an FEC decoder 620, and a descrambler 630.

The demapper 610 demaps the deinterleaved OFDM symbol with data bits. In this case, the demapper 610 performs demapping using a mapping rule which has been applied for mapping so that subcarriers with diverse priorities can be processed. That is, if subcarriers with diverse priorities are generated by varying and applying a mapping manner when the transmitting device processes the OFDM symbol, the demapper 610 may output data bits by applying an appropriate demapping manner to subcarriers with diverse priorities.

The FEC decoder 620 corrects errors in data bits, and performs FEC decoding. In greater detail, the FEC decoder 620 may include an inner decoder (not shown), a deinterleaver (not shown), and an outer decoder (not shown).

The inner decoder performs convolutional decoding, turbo decoding, or LDPC decoding for the received data bits. The deinterleaver deinterleaves the decoded data bits. The outer decoder decodes the deinterleaved data bits or symbols using Bose-Chaudhuri-Hocquenghem (BCH) or RS code. The FEC decoder 620 can have diverse configuration according to an exemplary embodiment.

The descrambler 630 descrambles the data decoded by the FEC decoder 620 so that a data stream can be restored.

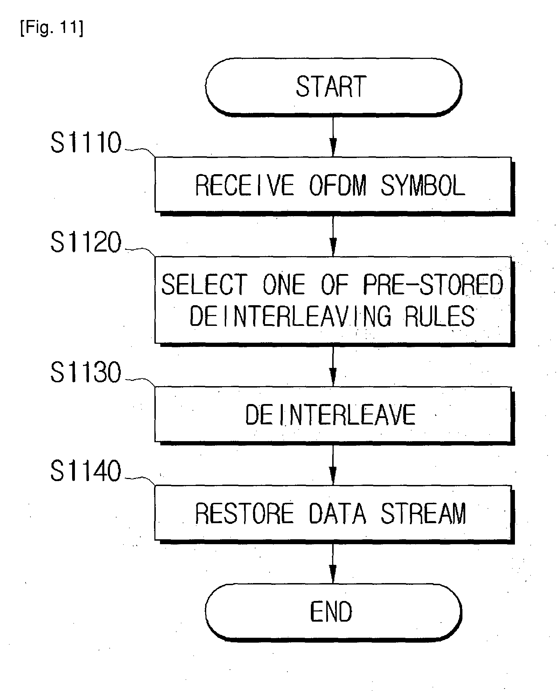

FIG. 11 is a flow chart illustrating an OFDM receiving method according to an exemplary embodiment of the present invention. As illustrated in FIG. 11, if an OFDM symbol is received (S1110), one of the pre-stored deinterleaving rules is selected (S1120) and deinterleaving is performed in subcarrier units (S1130). The received OFDM symbol consists of subcarriers which belong to diverse priority groups. For example, the received OFDM symbol consists of subcarriers with a high priority and subcarriers with a low priority. Since the position of each subcarrier has periodically changed during interleaving, the position of each subcarrier returns to the original position during deinterleaving.

Accordingly, each subcarrier in the deinterleaved OFDM symbol is decoded so that data streams are restored (S1140).

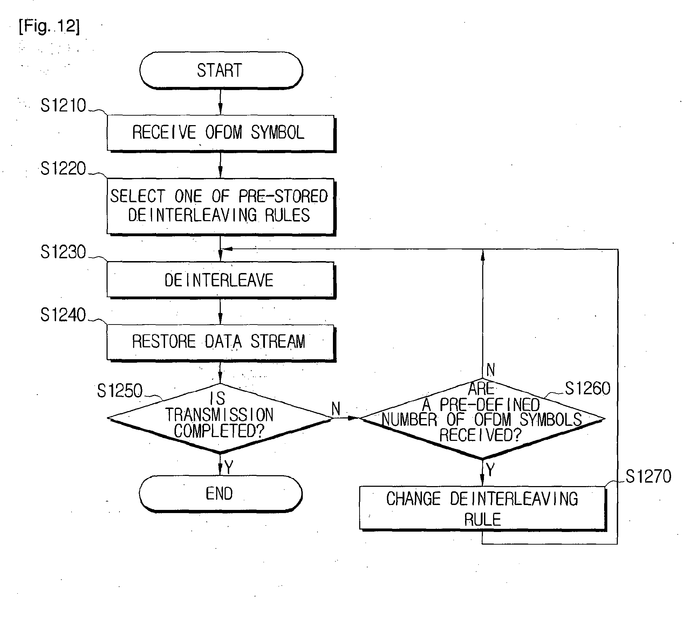

FIG. 12 is a flowchart illustrating the OFDM receiving method of FIG. 11 in more detail. As illustrated in FIG. 12, if an OFDM symbol is received (S1210), one of the pre-stored deinterleaving rules is selected (S1220) and deinterleaving is performed in subcarrier units (S1230). Each subcarrier is decoded so that data streams are restored (S1240). If OFDM symbols are received continuously (S1250), it is determined whether or not a pre-defined number of OFDM symbols are received (S1260). If a pre-defined number of OFDM symbols are received, a deinterleaving rule is changed (S1270) and a next OFDM symbol is deinterleaved in subcarrier units (S1280). An OFDM symbol consisting of subcarriers which are interleaved according to diverse interleaving rules can be processed effectively.

While the invention has been shown and described with reference to certain exemplary embodiments thereof, it will be understood by those skilled in the art that various changes in form and details may be made therein without departing from the scope of the invention as defined by the appended claims.

### Industrial Applicability

The present invention can be applied to a variety of communication, in particular, a European terrestrial digital broadcast transmission system.

## Claims

1. An orthogonal frequency division multiplexing, OFDM, transmitting device, comprising:
a transmission processing unit (110) which generates subcarriers with different priorities;
an interleaving unit (120) which selects one of a plurality of pre-defined interleaving rules and interleaves the subcarriers in subcarrier units according to the selected interleaving rule; and
a transmission unit (130) which outputs an OFDM symbol consisting of the interleaved subcarriers via a wireless channel;
**characterized in that** the interleaving unit alternately applies the plurality of interleaving rules so that the positions of subcarriers with different priorities are changed periodically.

2. The OFDM transmitting device of claim 1, wherein the transmission processing unit (110) maps data by alternately applying a plurality of mapping manners so that the plurality of subcarriers which varies priorities according to the mapping manners are generated and output.

3. The OFDM transmitting device of claim 1, wherein the interleaving unit (120) alternately applies the plurality of interleaving rules so that the positions of subcarriers with a high priority and subcarriers with a low priority from among the plurality of subcarriers are changed periodically.

4. The OFDM transmitting device of claim 1, wherein the transmission processing unit comprises:
a scrambler (310) which randomizes data to transmit;
a forward error correction, FEC, encoder (320) which codes the randomized data; and
a mapper (330) which maps the subcarriers of the coded data by alternately applying the plurality of mapping manners so that the subcarriers with priorities according to the applied mapping manners are output to the interleaving unit.

5. The OFDM transmitting device of claim 1, wherein the transmission processing unit comprises: a plurality of transmission processing modules (211, 212) each which code and output the data in different coding manners, and the interleaving unit (120, 220) interleaves the subcarriers which are provided from the plurality of transmission processing modules respectively by alternately selecting and applying the plurality of interleaving rules.

6. The OFDM transmitting device of one of claims 1 to 5, further comprising a storage unit (240) which stores information on the plurality of interleaving rules, wherein the interleaving unit performs interleaving by sequentially identifying the information on the plurality of interleaving rules, which are stored in the storage unit.

7. The OFDM transmitting device of one of claims 1 to 5, wherein the interleaving unit (120, 220) changes an interleaving rule to be applied whenever interleaving of a predefined number of OFDM symbols is completed.

8. An orthognal frequency division multiplexing, OFDM, receiving device, comprising:
a reception unit (410) which receives OFDM symbols from an OFDM transmitting device;
a storage unit (440) which stores a plurality of pre-defined deinterleaving rules;
a deinterleaving unit (420, 520) which sequentially selects one of a plurality of pre-defined deinterleaving rules and deinterleaves each received OFDM symbol in subcarrier units according to the selected deinterleaving rule; and
a reception processing unit (430) which processes the OFDM symbols consisting of the deinterleaved subcarriers so that data streams are restored;
**characterized in that** the reception unit receives the OFDM symbol in which subcarriers with different priorities have been interleaved by alternate application of a plurality of interleaving rules so that the positions of subcarriers with different priorities are changed periodically.

9. The OFDM receiving device of claim 8, wherein the deinterleaving unit (420, 520) performs deinterleaving by alternately selecting one of the plurality of deinterleaving rules according to an order which is pre-defined between the OFDM transmitting device and the OFDM receiving device.

10. The OFDM receiving device of claim 8, wherein the reception unit (410) receives the OFDM symbol in which subcarriers with a high priority and subcarriers with a low priority have been interleaved according to a variable interleaving rule.

11. The OFDM receiving device of claim 8, wherein the reception processing unit (410) processes only subcarriers which has a priority pre-defined in the deinterleaved OFDM symbol so that the data streams are restored.

12. The OFDM receiving device of claim 8, wherein the reception unit (410, 510) comprises:
an analog/digital converter (511) which performs analog to digital conversion of an OFDM symbol signal of a time area which is received from the OFDM transmitting device;
a demo dulator/synchronizer (512) which demodulates and timing- synchronizes the OFDM symbol output from the analog/digital converter;
a discrete Fourier transformer, DFT, (513) which performs discrete Fourier transform of the OFDM symbol so that an OFDM symbol of a frequency area is output; and
an equalizer (514) which equalizes the OFDM symbol, wherein the deinterleaving unit deinterleaves each OFDM symbol output from the equalizer in subcarrier units.

13. The OFDM receiving device of claim 8, wherein the reception processing unit comprises:
a demapper (610) which demaps each deinterleaved OFDM symbol in a demapping manner corresponding to each priority so that data bits are output;
a forward error correction, FEC, decoder (620) which corrects errors in the data bits and decodes the data bits; and
a descrambler (630) which descrambles the data decoded by the FEC decoder so that data streams are restored.

14. The OFDM receiving device of claim 8, wherein the reception processing unit (430, 530) comprises a plurality of reception processing modules (531, 532) each which perform decoding in a different decoding manner.

15. The OFDM receiving device of claim 8, wherein the deinterleaving unit (420, 520) changes a deinterleaving rule to be applied whenever deinterleaving of a predefined number of OFDM symbols is completed.

## Patentansprüche

1. OFDM (Multiplexing mit orthogonaler Frequenzteilung) -Sendevorrichtung, aufweisend:
eine Übertragungsverarbeitungseinheit (110), welche Unterträger mit verschiedenen Prioritäten generiert;
eine Verschachtelungseinheit (120), welche eine von mehreren vorbestimmten Verschachtelungsregeln auswählt und die Unterträger in Unterträgereinheiten entsprechend der ausgewählten Verschachtelungsregel verschachtelt; und
eine Übertragungseinheit (130), welche ein OFDM-Symbol, bestehend aus den verschachtelten Unterträgern, über einen kabellosen Kanal ausgibt;
**dadurch gekennzeichnet, dass** die Verschachtelungseinheit abwechselnd die mehreren Verschachtelungsregeln anwendet, so dass die Positionen von Unterträgern mit verschiedenen Prioritäten periodisch geändert werden.

2. OFDM-Sendevorrichtung nach Anspruch 1, wobei die Übertragungsverarbeitungseinheit (110) Daten durch abwechselndes Anwenden mehrerer Mappingmethoden einem Mapping unterzieht, so dass die mehreren Unterträger mit unterschiedlichen Prioritäten entsprechend der Mappingmethoden generiert und ausgegeben werden.

3. OFDM-Sendevorrichtung nach Anspruch 1, wobei die Verschachtelungseinheit (120) abwechselnd die mehreren Verschachtelungsregeln anwendet, so dass die Positionen von Unterträgern mit einer hohen Priorität und Unterträgern mit einer niedrigen Priorität inmitten der mehreren Unterträger periodisch geändert werden.

4. OFDM-Sendevorrichtung nach Anspruch 1, wobei die Übertragungsverarbeitungseinheit aufweist:
einen Verwürfler (310), welcher zu übertragende Daten zufällig anordnet;
ein FEC ("Forward Error Correction") -Kodiergerät (320), welches die zufällig angeordneten Daten kodiert; und
einen Mapper (330), welcher die Unterträger der kodierten Daten durch abwechselndes Anwenden der mehreren Mappingmethoden einem Mapping unterzieht, so dass die Unterträger mit Prioritäten entsprechend der angewendeten Mappingmethoden an die Verschachtelungseinheit ausgegeben werden.

5. OFDM-Sendevorrichtung nach Anspruch 1, wobei die Übertragungsverarbeitungseinheit aufweist: mehrere Übertragungsverarbeitungsmodule (211, 212), von welchen jedes die Daten in verschiedenen Kodierungsmethoden kodiert und ausgibt, und wobei die Verschachtelungseinheit (120, 220) die Unterträger verschachtelt, welche von den mehreren Übertragungsverarbeitungsmodulen bereitgestellt sind, jeweils durch abwechselndes Auswählen und Anwenden der mehreren Verschachtelungsregeln.

6. OFDM-Sendevorrichtung nach einem der Ansprüche 1 bis 5, des Weiteren aufweisend eine Speichereinheit (240), welche Informationen über die mehreren Verschachtelungsregeln speichert, wobei die Verschachtelungseinheit ein Verschachteln durch aufeinanderfolgendes Erkennen der Informationen über die mehreren Verschachtelungsregeln ausführt, welche in der Speichereinheit gespeichert sind.

7. OFDM-Sendevorrichtung nach einem der Ansprüche 1 bis 5, wobei die Verschachtelungseinheit (120, 220) eine anzuwendende Verschachtelungsregel ändert, wann immer ein Verschachteln einer vorbestimmten Zahl von OFDM-Symbolen abgeschlossen ist.

8. OFDM (Multiplexing mit orthogonaler Frequenzteilung) -Empfangsvorrichtung, aufweisend:
eine Empfangseinheit (410), welche OFDM-Symbole von einer OFDM-Sendevorrichtung empfängt;
eine Speichereinheit (440), welche mehrere vorbestimmte Entschachtelungsregeln speichert;
eine Entschachtelungseinheit (420, 520), welche aufeinanderfolgend eine von mehreren vorbestimmten Entschachtelungsregeln auswählt und jedes empfangene OFDM-Symbol in Unterträgereinheiten entsprechend der ausgewählten Entschachtelungsregel entschachtelt; und
eine Empfangsverarbeitungseinheit (430), welche die OFDM-Symbole, bestehend aus den entschachtelten Unterträgern, verarbeitet, so dass Datenströme wiederhergestellt werden;
**dadurch gekennzeichnet, dass** die Empfangseinheit das OFDM-Symbol empfängt, in welchem Unterträger mit verschiedenen Prioritäten durch abwechselnde Anwendung von mehreren Verschachtelungsregeln verschachtelt wurden, so dass die Positionen von Unterträgern mit verschiedenen Prioritäten periodisch geändert werden.

9. OFDM-Empfangsvorrichtung nach Anspruch 8, wobei die Entschachtelungseinheit (420, 520) ein Entschachteln durch abwechselndes Auswählen einer der mehreren Entschachtelungsregeln entsprechend einer Reihenfolge, welche zwischen der OFDM-Sendevorrichtung und der OFDM-Empfangsvorrichtung vorbestimmt ist, ausführt.

10. OFDM-Empfangsvorrichtung nach Anspruch 8, wobei die Empfangseinheit (410) das OFDM-Symbol empfängt, in welchem Unterträger mit einer hohen Priorität und Unterträger mit einer niedrigen Priorität entsprechend einer variablen Verschachtelungsregel verschachtelt wurden.

11. OFDM-Empfangsvorrichtung nach Anspruch 8, wobei die Empfangsverarbeitungseinheit (410) nur Unterträger mit vorbestimmter Priorität in dem entschachtelten OFDM-Symbol verarbeitet, so dass die Datenströme wiederhergestellt werden.

12. OFDM-Empfangsvorrichtung nach Anspruch 8, wobei die Empfangseinheit (410, 510) aufweist:
einen Analog/Digital-Wandler (511), welcher eine Analog/Digital-Umwandlung eines OFDM-Symbolsignals eines Zeitbereichs ausführt, welches von der OFDM-Sendevorrichtung empfangen wird;
einen Demodulator/Synchronisator (512), welcher die OFDM-Symbolausgabe vom Analog/Digital-Wandler demoduliert und zeitsynchronisiert;
einen DFT (diskreten Fourier-Transformator) (513), welcher eine diskrete Fourier-Transformation des OFDM-Symbols ausführt, so dass ein OFDM-Symbol eines Frequenzbereichs ausgegeben wird; und
einen Entzerrer (514), welcher das OFDM-Symbol entzerrt, wobei die Entschachtelungseinheit jede OFDM-Symbolausgabe vom Entzerrer in Unterträgereinheiten entschachtelt.

13. OFDM-Empfangsvorrichtung nach Anspruch 8, wobei die Empfangsverarbeitungseinheit aufweist:
einen Demapper (610), welcher jedes entschachtelte OFDM-Symbol einem Demapping in einer Demappingmethode entsprechend jeder Priorität unterzieht, so dass Datenbits ausgegeben werden;
einen FEC ("Forward Error Correction")-Dekodierer (620), welcher Fehler in den Datenbits korrigiert und die Datenbits dekodiert; und
ein Entwürfler (630), welcher die durch den FEC-Dekodierer dekodierten Daten entwürfelt, so dass Datenströme wiederhergestellt werden.

14. OFDM-Empfangsvorrichtung nach Anspruch 8, wobei die Empfangsverarbeitungseinheit (430, 530) mehrere Empfangsverarbeitungsmodule (531, 532) aufweist, von welchen jedes ein Dekodieren in einer anderen Dekodierungsmethode ausführt.

15. OFDM-Empfangsvorrichtung nach Anspruch 8, wobei die Entschachtelungseinheit (420, 520) eine anzuwendende Entschachtelungsregel ändert, wann immer ein Entschachteln einer vorbestimmten Zahl von OFDM-Symbolen abgeschlossen ist.

## Revendications

1. Dispositif de transmission à multiplexage par répartition orthogonale de la fréquence, OFDM, comprenant :
une unité de traitement de transmission (110) qui génère des sous-porteuses ayant des priorités différentes ;
une unité d'entrelacement (120) qui sélectionne l'une d'une pluralité de règles d'entrelacement prédéfinies et entrelace les sous-porteuses dans des unités de sous-porteuses selon la règle d'entrelacement sélectionnée ; et
une unité de transmission (130) qui délivre en sortie un symbole OFDM constitué des sous-porteuses par l'intermédiaire d'un canal sans fil ;
**caractérisé en ce que** l'unité d'entrelacement applique alternativement la pluralité de règles d'entrelacement de manière à ce que les positions des sous-porteuses ayant différentes priorités soient changées périodiquement.

2. Dispositif de transmission OFDM selon la revendication 1, dans lequel l'unité de traitement de transmission (110) mappe les données en appliquant alternativement une pluralité de manières de mappage de sorte que la pluralité de sous-porteuses qui font varier les priorités selon les manières de mappage soient générées et délivrées en sortie.

3. Dispositif de transmission OFDM selon la revendication 1, dans lequel l'unité d'entrelacement (120) applique alternativement la pluralité de règles d'entrelacement de sorte que les positions des sous-porteuses ayant une priorité élevée et des sous-porteuses ayant une faible priorité parmi la pluralité de sous-porteuses soient changées périodiquement.

4. Dispositif de transmission OFDM selon la revendication 1, dans lequel l'unité de traitement de transmission comprend :
un brouilleur (310) qui randomise les données à transmettre ;
un codeur à correction d'erreurs sans voie de retour, FEC, (320) qui code les données randomisées ; et
un mappeur (330) qui mappe les sous-porteuses de données codées en appliquant alternativement la pluralité de manières de mappage de sorte que les sous-porteuses ayant des priorités selon les manières de mappage appliquées soient délivrées en sortie à l'unité d'entrelacement.

5. Dispositif de transmission OFDM selon la revendication 1, dans lequel l'unité de traitement de transmission comprend : une pluralité de modules de traitement de transmission (211, 212), chacun codant et délivrant en sortie les données dans différentes manières de codage, et l'unité d'entrelacement (120, 220) qui entrelace les sous-porteuses qui sont fournies par la pluralité de modules de traitement de transmission, respectivement, en sélectionnant et en appliquant en alternance la pluralité de règles d'entrelacement.

6. Dispositif de transmission OFDM selon l'une des revendications 1 à 5, comprenant en outre une unité de stockage (240) qui stocke des informations sur la pluralité de règles d'entrelacement, où l'unité d'entrelacement exécute un entrelacement en identifiant séquentiellement les informations sur la pluralité de règles d'entrelacement, qui sont stockées dans l'unité de stockage.

7. Dispositif de transmission OFDM selon l'une des revendications 1 à 5, dans lequel l'unité d'entrelacement (120, 220) change une règle d'entrelacement à appliquer à chaque fois que l'entrelacement d'un nombre prédéfini de symboles OFDM est terminé.

8. Dispositif de réception à multiplexage par répartition orthogonale de la fréquence, OFDM, comprenant :
une unité de réception (410) qui reçoit des symboles OFDM à partir d'un dispositif de transmission OFDM ;
une unité de stockage (440) qui stocke une pluralité de règles de désentrelacement prédéfinies ;
une unité de désentrelacement (420, 520) qui sélectionne séquentiellement l'une d'une pluralité de règles de désentrelacement prédéfinies et désentrelace chaque symbole OFDM reçu dans les unités de sous-porteuses conformément à la règle de désentrelacement sélectionnée ; et
une unité de traitement de réception (430) qui traite les symboles OFDM constitués des sous-porteuses désentrelacées de sorte à ce que les flux de données soient restaurés ;
**caractérisé en ce que** l'unité de réception reçoit le symbole OFDM dans lequel des sous-porteuses ayant différentes priorités ont été entrelacées par une application alternée d'une pluralité de règles d'entrelacement de manière à ce que les positions des sous-porteuses ayant différentes priorités soient changées périodiquement.

9. Dispositif de réception OFDM selon la revendication 8, dans lequel l'unité de désentrelacement (420, 520) exécute le désentrelacement en sélectionnant alternativement une de la pluralité des règles de désentrelacement selon un ordre qui est prédéfini entre le dispositif de transmission OFDM et le dispositif de réception OFDM.

10. Dispositif de réception OFDM selon la revendication 8, dans lequel l'unité de réception (410) reçoit le symbole OFDM dans lequel des sous-porteuses ayant une priorité élevée et des sous-porteuses ayant une faible priorité ont été entrelacées selon une règle d'entrelacement variable.

11. Dispositif de réception OFDM selon la revendication 8, dans lequel l'unité de traitement de réception (410) traite uniquement les sous-porteuses qui ont une priorité prédéfinie dans le symbole OFDM désentrelacé de manière à ce que les flux de données soient restaurés.

12. Dispositif de réception OFDM selon la revendication 8, dans lequel l'unité de réception (410, 510) comprend :
un convertisseur analogique/numérique (511) qui effectue une conversion analogique-numérique d'un signal de symbole OFDM d'une zone de temps qui est reçue du dispositif de transmission OFDM ;
un démodulateur/synchroniseur (512) qui démodule et synchronise l'horloge du symbole OFDM délivré en sortie depuis le convertisseur analogique/numérique ;
un dispositif de transformation discrète de Fourier, DFT, (513) qui effectue une transformée de Fourier discrète du symbole OFDM de sorte qu'un symbole OFDM d'une zone de fréquence soit délivré en sortie ; et
un égaliseur (514) qui égalise le symbole OFDM, où l'unité de désentrelacement désentrelace chaque symbole OFDM délivré en sortie par l'égaliseur dans des unités de sous-porteuses.

13. Dispositif de réception OFDM selon la revendication 8, dans lequel l'unité de traitement de réception comprend :
un dispositif de démappage (610) qui démappe chaque symbole OFDM désentrelacé suivant une manière de démappage qui correspond à chaque priorité de sorte que des bits de données soient délivrés en sortie ;
un décodeur à correction d'erreurs sans voie de retour, FEC, (620) qui corrige les erreurs dans les bits de données et décode les bits de données ; et
un désembrouilleur (630) qui désembrouille les données décodées par le décodeur FEC de manière à ce que des flux de données soient restaurés.

14. Dispositif de réception OFDM selon la revendication 8, dans lequel l'unité de traitement de réception (430, 530) comprend une pluralité de modules de traitement de réception (531, 532), chacun effectuant un décodage d'une manière de décodage différente.

15. Dispositif de réception OFDM selon la revendication 8, dans lequel l'unité de désentrelacement (420, 520) change une règle de désentrelacement à appliquer à chaque fois que le désentrelacement d'un nombre prédéfini de symboles OFDM est terminé.
